# EUROPÄISCHE PATENTSCHRIFT

(11) **EP 3 174 745 B1**
(45) Veröffentlichungstag und Bekanntmachung des Hinweises auf die Patenterteilung: **26.09.2018**
(21) Anmeldenummer: 15763820.6
(22) Anmeldetag: 30.07.2015
(51) Int. Cl.: B60H 1/00, F16K 37/00, F16L 37/44, F25B 45/00, B67D 7/02

(54) **VORRICHTUNG ZUR BEFÜLLUNG VON KLIMAANLAGEN MIT EINEM KÄLTEMITTEL IN DER FAHRZEUGENDMONTAGE**
DEVICE FOR FILLING AIR-CONDITIONING SYSTEMS WITH A REFRIGERANT IN THE FINAL ASSEMBLY OF THE VEHICLE
DISPOSITIF DE REMPLISSAGE DE SYSTÈMES DE CLIMATISATION AVEC UN RÉFRIGÉRANT LORS DU MONTAGE FINAL SUR VÉHICULE

(30) Priorität: 01.08.2014 DE 102014011611
(43) Veröffentlichungstag der Anmeldung: 07.06.2017
(73) Patentinhaber: Dürr Somac GmbH, 09366 Stollberg (DE)
(72) Erfinder: WÖHNER, Carsten, 70619 Stuttgart (DE); WIELAND, Frank, 09235 Burkhardtsdorf (DE); WAPPLER, Daniel, 08056 Zwickau (DE)
(74) Vertreter: Patentanwälte Findeisen & Neumann
(86) Internationale Anmeldenummer: PCT/DE2015/000393
(87) Internationale Veröffentlichungsnummer: WO 2016/015706

(56) Entgegenhaltungen:
- GB-A- 2 250 073
- US-A1- 2007 256 742
- US-B1- 6 450 199

## Beschreibung

Die Erfindung betrifft eine Vorrichtung zur Befüllung von Klimaanlagen mit einem Kältemittel in der Fahrzeugendmontage, wobei die zu befüllende Klimaanlage an der Niederdruckseite und an der Hochdruckseite jeweils ein Anschlussventil aufweist, über das die Klimaanlage druckgetestet, evakuiert und befüllt werden kann und das Wartungsarbeiten im weiteren Lebenszyklus der Klimaanlage ermöglicht, wobei die Anschlussventile hinsichtlich ihrer geometrischen Kontur unterschiedlich ausgestaltet sind, um Verwechslungen zwischen der Hochdruckseite und der Niederdruckseite zu vermeiden und um gleichzeitig zu gewährleisten, dass jeweils nur das konkret zulässige Kältemittel in die Klimaanlage befüllt wird und wobei die Befüllung mit einer Befüllanlage durchgeführt wird, die jeweils über Adapter mit den Anschlussventilen an der Niederdruckseite und an der Hochdruckseite in Wirkverbindung gebracht wird.

Die üblicherweise mit dem englischsprachigen Begriff "Mobile Air Conditioning System / MAC" bezeichneten mobilen Klimaanlagen in Fahrzeugen weisen an der Niederdruckseite und an der Hochdruckseite jeweils Anschlussventile auf. Über diese Anschlussventile werden die Klimaanlagen druckgetestet, evakuiert und befüllt. Weiterhin ermöglichen diese Ventile notwendige Wartungsarbeiten im weiteren Lebenszyklus der Klimaanlage. Dabei sind die Anschlussventile hinsichtlich ihrer geometrischen Kontur unterschiedlich ausgestaltet. Somit werden Verwechslungen zwischen der Hochdruck- und der Niederdruckseite vermieden und gleichzeitig wird gewährleistet, dass jeweils nur das konkret zulässige Kältemittel in die Klimaanlage befüllt wird. Die Verwechslungssicherheit zur Verhinderung der Befüllung mit einem falschen Kältemittel ist vor allem beim Hochdruckadapter gefordert, da über diesen die meisten Klimaanlagen befüllt werden.

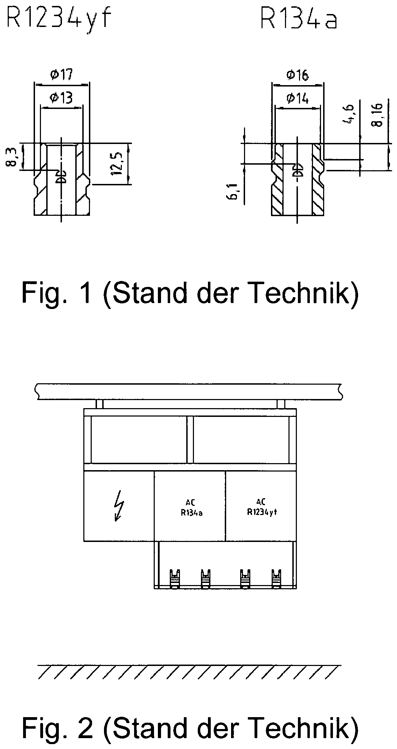

Für eine Befüllung von Behältern, Kreisläufen und ähnlichen Komponenten von Fahrzeugen mit Kraft-, Schmier-, Kühl- und sonstigen Betriebsstoffen sind bereits verschiedenartige Vorrichtungen bekannt, zum Beispiel aus US 6 848 670 B2, US 2007 / 0 256 742 A1 welches den Oberbegriff des Anspruchs 1 offenbart, oder WO 2007 / 106 486 A1. Hierbei müssen insbesondere die Anschlussgeometrien zwischen der Befüllvorrichtung und der zu befüllenden Baugruppe aufeinander abgestimmt werden. Die Geometrien der verschiedenen Anschlussventile bei Klimaanlagen sind in der international verbindlichen SAE-Norm J 639 definiert. Die diesbezüglich konkreten Abmessungen und Unterschiede der Anschlussventile für die als Kältemittel üblichen Medien R134a und R1234yf sind aus **Fig. 1** ersichtlich.

In der Fahrzeugendmontage werden die Klimaanlagen erstmalig mit Kältemittel befüllt. Dieser Prozess der Erstbefüllung wird mit Befüllanlagen durchgeführt, die für jede Art der zu befüllenden Klimaanlagen einen Hochdruck- und einen Niederdruckadapter benötigen. Sofern in der Endmontage zwei unterschiedliche Klimaanlagen verbaut werden, die auch mit unterschiedlichen Kältemitteln (z.B. R134a und R1234yf) befüllt werden müssen, erfordert dies den Einsatz von insgesamt vier Adaptern an der zugehörigen Befüllanlage. Dabei kommen hier, bezogen auf die unterschiedlichen Kältemittel, auch unterschiedliche Komponenten der Befüllanlage zum Einsatz. Derartige Ausführungen mit einem nach Medien getrennten Aufbau der Befüllanlage erhöhen den Investitionsaufwand, verursachen Kosten für die weitere Wartung und erfordern in der Endmontage einen erheblichen Bauraum, der den verfügbaren freien Bauraum für mögliche Erweiterungen an der Befüllanlage einschränkt. **Fig. 2** zeigt den Grundaufbau einer entsprechend ausgeführten Befüllanlage mit Medientrennung gemäß dem Stand der Technik.

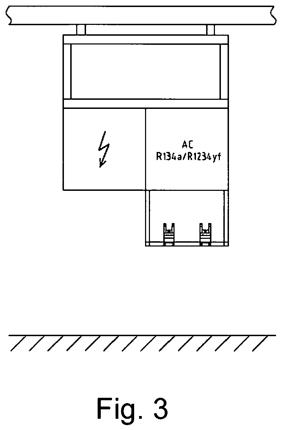

Zur Vermeidung derartiger Nachteile wäre es vorteilhaft, sofern der bisher notwendige Montageraum sowie die bisherigen Investitions- und Betriebskosten reduziert werden können, ohne dass dadurch die notwendige Verwechslungssicherheit hinsichtlich unterschiedlicher Kältemittel beeinträchtigt wird. Somit könnte der Aufbau einer bisher üblichen Befüllanlage gemäß Fig. 2 in vorteilhafter Weise auf einen Grundaufbau gemäß **Fig. 3** reduziert werden.

Aufgabe der Erfindung ist es deshalb, eine Vorrichtung zu schaffen, die mit lediglich zwei Adaptern (einen Adapter für die Hochdruckseite und einen Adapter für die Niederdruckseite) eine Befüllung mit zwei unterschiedlichen Kältemitteln ermöglicht und die dennoch gewährleistet, dass ein jeweils richtiges Kältemittel in eine jeweils richtige Klimaanlage befüllt wird. Dies setzt voraus, dass der Hochdruckadapter und der Niederdruckadapter auf jeweils unterschiedliche Fahrzeuganschlussventile spannen und abdichten können. Gleichzeitig muss detektiert werden, welche Klimaanlage aktuell vorliegt, um das richtige Kältemittel für die Befüllung auswählen zu können. Hierfür ist zu erkennen, auf welche Anschlussventile der Hochdruckadapter aktuell gespannt hat, so dass die Unterschiede in den Geometrien der Anschlussventile auszuwerten sind.

Die Aufgabe wird durch eine Vorrichtung mit den technischen Merkmalen gemäß Anspruch 1 gelöst. Demzufolge sind für zwei unterschiedliche Kältemittel, nämlich für das Kältemittel R134a und für das Kältemittel R1234yf jeweils nur ein Hochdruckadapter und ein Niederdruckadapter vorgesehen. Der Hochdruckadapter, über den die Klimaanlage befüllt wird, ist mit mechanischen Komponenten ausgestattet, die in ihrem Zusammenwirken ein Öffnen und Befüllen eines nicht erwarteten Fahrzeugventils verhindern. Der Hochdruckadapter kann mittels eines zugeordneten Wegmesssystems einen richtigen und/oder falschen Fahrzeuganschluss diagnostizieren.

Die Vorrichtung weist ein Spannsystem auf, das einen Schieber mit einem Magnet, einen Anschlagkolben mit einem integrierten Stößelkolben, ein Wegmesssystem und Spannkugeln umfasst. Der Schieber nimmt in Abhängigkeit der jeweils konkreten geometrischen Ausführung der Anschlussventile unterschiedliche Stellungen ein, die durch den Magnet über das Wegmesssystem ausgewertet werden. Dabei ist der Schieber so ausgestaltet, dass er in der Grundstellung den Adapter mittels einer als O-Ring ausgestalteten Dichtung verschließt. Der Anschlagkolben kann entsprechend einer Typvorwahl an der Befüllanlage auf Stellungen für das eine Kältemittel R134a (untere Stellung) und/oder für das andere Kältemittel R1234yf (obere Stellung) positioniert werden, wobei diese beiden Stellungen die Bewegung des Schiebers lediglich in diesen vorgegebenen Endlagen bewirken. Der im Anschlagkolben integrierte Stößelkolben kann einen definiert begrenzten Hub zum Öffnen der Anschlussventile des Fahrzeuganschlusses ausführen, wobei die entsprechende Hubbewegung in Abhängigkeit der jeweils konkreten Stellung des Anschlagkolbens aus der voreingenommenen Position für das eine oder für das andere Kältemittel beginnend erfolgt. Die Spannkugeln werden aufgrund der erforderlichen Spannwegfreiheit durch einen Stift gehalten. Der Hochdruckadapter weist für jedes Kältemittel eine separate Füllleitung mit einem Füllventil auf und der Niederdruckadapter ist so ausgestaltet, dass er auf beide medienspezifische Anschlussventile der Fahrzeugklimaanlage spannen kann.

Somit ist eine Vorrichtung verfügbar, die mit lediglich zwei Adaptern eine Befüllung mit zwei unterschiedlichen Kältemitteln ermöglicht und die dennoch gewährleistet, dass ein jeweils richtiges Kältemittel in eine jeweils richtige Klimaanlage befüllt wird. Demzufolge sind die für beide Kältemittelbefüllungen notwendigen Baugruppen und Komponenten für gleiche Prozessschritte wie Drucktest und Evakuieren nur einmal notwendig. Somit wird für eine Befüllung mit zwei Kältemitteln nur ein Gefäß je Konsolenteil einer Befüllanlage benötigt.

Nachfolgend wird ein Ausführungsbeispiel anhand der Zeichnung beschrieben. Es zeigen:
Fig. 1 Anschlussventile für Kältemittel R1234yf und R134a gemäß Stand der Technik
Fig. 2 Grundaufbau einer Befüllanlage mit Medientrennung gemäß Stand der Technik
Fig. 3 Grundaufbau einer neuartigen Befüllanlage mit kombinierter Befüllung
Fig. 4 Spannsystem der erfindungsgemäßen Vorrichtung in Grundstellung
Fig. 5 bis Fig. 9 verschiedene Betriebsstellungen eines Spannsystems gemäß Fig. 4
Fig. 10 Detail des Spannsystems für eine Lagefixierung von Spannkugeln
Fig. 11 Detail des Spannsystems mit einem Träger für Spannkugeln
Fig. 12 Detail des Spannsystems mit zusätzlicher Arretierung für Spannkugeln

Die in der Zeichnung dargestellte Vorrichtung ist zur Befüllung von Klimaanlagen (sog. MAC) mit einem Kältemittel in der Fahrzeugendmontage konzipiert. Hierbei weist die zu befüllende Klimaanlage an der Niederdruckseite und an der Hochdruckseite jeweils ein Anschlussventil auf, über das die Klimaanlage druckgetestet, evakuiert und befüllt werden kann und das Wartungsarbeiten im weiteren Lebenszyklus der Klimaanlage ermöglicht. Die Anschlussventile sind hinsichtlich ihrer geometrischen Kontur unterschiedlich ausgestaltet, um Verwechslungen zwischen der Hochdruckseite und der Niederdruckseite zu vermeiden und um gleichzeitig zu gewährleisten, dass jeweils nur das konkret zulässige Kältemittel in die Klimaanlage befüllt wird. Die Befüllung wird mit einer Befüllanlage durchgeführt, die jeweils über Adapter mit den Anschlussventilen an der Niederdruckseite und an der Hochdruckseite in Wirkverbindung gebracht wird.

Der wesentliche Aspekt der erfindungsgemäßen Vorrichtung besteht darin, dass für zwei unterschiedliche Kältemittel R134a und R1234yf jeweils nur ein Hochdruckadapter und ein Niederdruckadapter vorgesehen sind. Dabei ist der Hochdruckadapter, über den die Klimaanlage befüllt wird, mit mechanischen Komponenten ausgestattet, die in ihrem Zusammenwirken ein Öffnen und Befüllen eines nicht erwarteten Fahrzeugventils verhindern. Weiterhin kann der Hochdruckadapter mittels eines zugeordneten Wegmesssystems einen richtigen bzw. falschen Fahrzeuganschluss diagnostizieren.

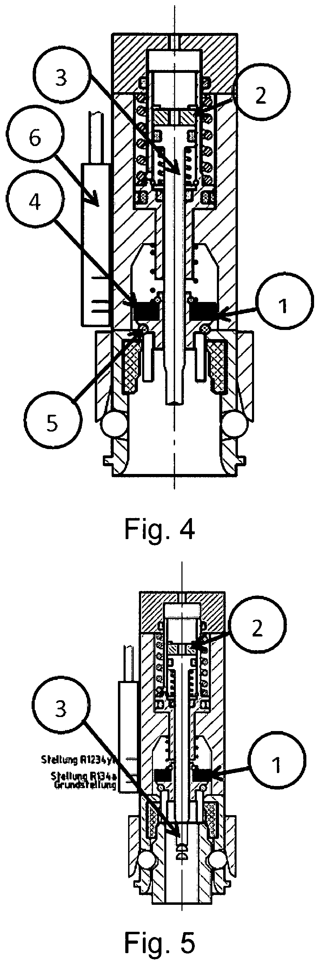

Aus **Fig. 4** ist der grundsätzliche Aufbau eines erfindungsgemäß ausgestalteten Spannsystems ersichtlich. Demzufolge umfasst diese Konstruktion als wesentliche Bauteile einen Schieber 1, einen Anschlagkolben 2 und ein Wegmesssystem 6. Dem Schieber 1 ist ein Magnet 4 zugeordnet. Der Anschlagkolben 2 weist einen integrierten Stößelkolben 3 auf.

Der Schieber 1 nimmt abhängig von den Maßen [Maß L1 aus SAE J639] unterschiedliche Stellungen ein, die durch den integrierten Magnet 4 über das Wegmesssystem 6 ausgewertet werden können.

Der Anschlagkolben 3 wird entsprechend der Typvorwahl an der Befüllanlage auf die Positionen R134a (untere Stellung) bzw. R1234yf (obere Stellung) positioniert. Diese beiden Stellungen ermöglichen die Bewegung des Schiebers 1 nur in diesen vorgegebenen Endlagen. Der im Anschlagkolben 2 integrierte Stößelkolben 3 hat einen begrenzten Hub zum Öffnen des Ventils im Fahrzeuganschluss. Dieser definierte Hub beginnt je nach Position des Anschlagkolbens 2 aus der voreingenommenen Position für R134a oder R1234yf heraus.

Der Schieber 1 ist weiterhin so ausgebildet, dass er in seiner Grundstellung den Adapter verschließt, hierzu ist eine O-Ringdichtung 5 am Schieber 1 vorgesehen.

In einem vollständigen Befüllablauf werden somit folgende Operationen durchlaufen:
An der Befüllanlage wird der Typ des zu befüllenden Fahrzeuges per Hand durch den Werker oder auch automatisiert gewählt. Daraufhin fährt der Anschlagkolben 2 in die entsprechende Position für das Kältemittel R134a oder für das Kältemittel R1234yf.

Der Werker setzt den Adapter auf den Fahrzeuganschluss, wobei der Schieber 1 entsprechend der Maße des Fahrzeuganschlusses verschoben wird, und versucht den Adapter zu spannen.

Dabei ergeben sich vier zu betrachtende Szenarien, die unter Bezug auf Fig. 5 bis Fig. 9 nachfolgend näher erläutert werden:
**Fig. 5****:** Die Anlage erwartet einen Fahrzeuganschluss für das Kältemittel R134a und findet diesen vor.

Durch die Fahrzeugtypwahl ist der Anschlagkolben 2 in Position R134a (unten). Der Fahrzeuganschluss für R134a liegt vor. Der Schieber 1 mit dem Magnet 4 wird auf die R134a Stellung ausgelenkt. Das Wegmesssystem 6 bestätigt die Position. Der Adapter kann erfolgreich gespannt werden. Der Schieber 1 ist geöffnet. Der Stößelkolben 3 kann das Fahrzeugventil öffnen. Eine Befüllung ist somit möglich.

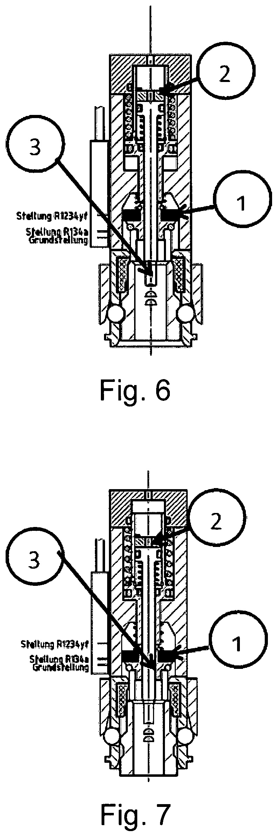

**Fig. 6****:** Die Anlage erwartet einen Fahrzeuganschluss für das Kältemittel R1234yf und findet diesen vor.

Durch die Fahrzeugtypwahl ist der Anschlagkolben 2 in Position R1234yf (oben). Der Fahrzeuganschluss für R1234yf liegt vor. Der Schieber 1 mit dem Magnet 4 wird auf die R1234yf Stellung ausgelenkt. Das Wegmesssystem 6 bestätigt die Position. Der Adapter kann erfolgreich gespannt werden. Der Schieber 1 ist geöffnet. Der Stößelkolben 3 kann das Fahrzeugventil öffnen. Eine Befüllung ist somit möglich.

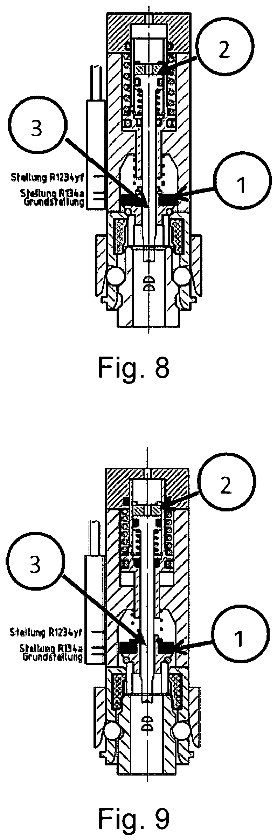

**Fig. 7** **und** **Fig. 8****:** Die Anlage erwartet einen Fahrzeuganschluss für das Kältemittel R134a, sie erhält jedoch einen Fahrzeuganschluss für R1234yf.

Durch die Fahrzeugtypwahl ist der Anschlagkolben 2 in Position R134a (unten). Der Fahrzeuganschluss für R1234yf liegt vor. Der Schieber 1 mit dem Magnet 1 wird durch den Anschlagkolben 2 auf die Stellung für R134a begrenzt. Der Adapter kann nicht erfolgreich gespannt werden. Es ist kein Formschluss gegeben und der Fahrzeuganschluss wird beim Spannen herausgedrückt. Das Wegmesssystem 6 erkennt die falsche Position. Der Schieber 1 geht in die Grundstellung und verschließt die Kupplung. Der Stößelkolben 3 kann das Fahrzeugventil nicht öffnen, da nicht erfolgreich gespannt worden ist. Eine Befüllung ist somit nicht möglich.

**Fig. 9****:** Die Anlage erwartet einen Fahrzeuganschluss für das Kältemittel R1234yf, sie erhält jedoch einen Fahrzeuganschluss für R134a.

Durch die Fahrzeugtypwahl ist der Anschlagkolben 2 in Position R1234yf (oben). Der Fahrzeuganschluss für R134a liegt vor. Der Schieber 1 mit dem Magnet 4 wird durch den Anschlagkolben 2 auf die Stellung für R1234yf begrenzt und wird nur auf die Stellung für R134a ausgelenkt. Der Adapter kann erfolgreich gespannt werden, es ist Formschluss gegeben. Das Wegmesssystem 6 erkennt die falsche Position. Der Schieber 1 ist geöffnet. Der Stößelkolben 3 kann das Fahrzeugventil nicht öffnen, da der Hub des Stößelkolbens 3 nicht ausreicht, um das Ventil im Fahrzeug zu öffnen. Eine Befüllung ist somit nicht möglich.

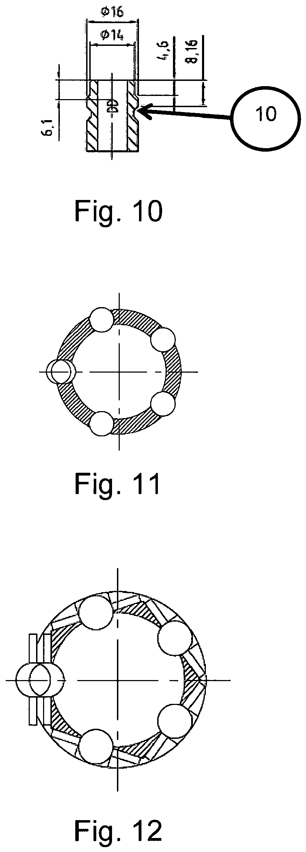

Weiterhin ist zu berücksichtigen, dass der Adapter formschlüssig vakuum- und druckdicht gespannt werden muss. Dies wird erreicht, indem Spannkugeln formschlüssig in eine aus **Fig. 10** ersichtliche umlaufende Rille 10 des Fahrzeuganschlusses greifen.

Bei einem Spannsystem, welches auf einen Kältemittelanschluss zugeschnitten ist, können diese Spannkugeln, bedingt durch einen Formschluss, in einem Träger gehalten werden und fallen beim Spannen / Entspannen nicht aus diesem heraus, siehe hierzu **Fig. 11****.**

Sofern das Spannsystem auf unterschiedliche Fahrzeuganschlüsse erweitert werden soll, müssen die Spannkugeln mittels einer anderen Ausgestaltung gehalten werden, um die dann notwendige größere Betätigungswegfreiheit zu ermöglichen. Eine hierfür geeignete Variante ist in **Fig. 12** dargestellt. Dabei sind die Spannkugeln jeweils mit einem Stift versehen, so dass sie über diesen Stift in einem erweiterten Bewegungsbereich gehalten werden.

Mit der vorliegenden technischen Lösung wird ein Spannsystem geschaffen, das mit mechanischen Begrenzungen und Verriegelungen trotz eines deutlich geringeren Bauteilaufwandes gegenüber dem Stand der Technik eine hohe Sicherheit gegen eine Befüllung mit einem falschen Kältemittel sowie gegen eine Befüllung auf einem falschen Fahrzeuganschluss gewährleistet. Gleichzeitig wird über ein Wegmesssystem angezeigt, auf welchem Fahrzeuganschluss (R134a oder R1234yf) der Adapter aufgesetzt wurde.

## Patentansprüche

1. Vorrichtung zur Befüllung von Klimaanlagen mit einem Kältemittel in der Fahrzeugendmontage,
wobei die zu befüllenden Klimaanlagen an der Niederdruckseite und an der Hochdruckseite jeweils ein Anschlussventil aufweisen, welche hinsichtlich ihrer geometrischen Kontur unterschiedlich ausgestaltet sind, um Verwechslungen zwischen der Hochdruckseite und der Niederdruckseite zu vermeiden und um gleichzeitig zu gewährleisten, dass jeweils nur das konkret zulässige Kältemittel in die Klimaanlage befüllt wird und
wobei die Vorrichtung über Niederdruck- und Hochdruckadapter mit den Anschlussventilen an der Niederdruckseite und an der Hochdruckseite in Wirkverbindung bringbar ist,
**dadurch gekennzeichnet,**
**dass** für zwei unterschiedliche Kältemittel R134a und R1234yf jeweils nur ein Hochdruckadapter und ein Niederdruckadapter vorgesehen ist,
wobei die Anschlussventile der zu befüllenden Klimaanlagen für die zwei unterschiedlichen Kältemittel R134a und R1234yf unterschiedliche Geometrien aufweisen,
wobei der Hochdruckadapter, über den die Klimaanlage befüllt wird, mit mechanischen Komponenten ausgestattet ist, die in ihrem Zusammenwirken ein Öffnen und Befüllen eines nicht dem vorgewählten Kältemittel entsprechenden Anschlussventils verhindern,
indem durch Typvorwahl eines der zwei unterschiedlichen Kältemittel R134a und R1234yf im Adapter ein Anschlagkolben derart positionierbar ist, dass der Hochdruckadapter mittels eines zugeordneten Wegmesssystems einen richtigen und/oder falschen Fahrzeuganschluss diagnostizieren kann, wobei
die Vorrichtung ein Spannsystem aufweist, das einen Schieber (1) mit einem Magnet (4), einen Anschlagkolben (2) mit einem integrierten Stößelkolben (3), ein Wegmesssystem (6) und Spannkugeln umfasst,
wobei der Schieber (1) in Abhängigkeit der jeweils konkreten geometrischen Ausführung der Anschlussventile unterschiedliche Stellungen einnimmt, die durch den Magnet (4) über das Wegmesssystem (6) ausgewertet werden,
wobei der Schieber (1) so ausgestaltet ist, dass er in der Grundstellung den Adapter mittels einer als O-Ring ausgestalteten Dichtung (5) verschließt,
wobei der Anschlagkolben (2) entsprechend einer Typvorwahl an der Befüllanlage auf Stellungen für das eine Kältemittel R134a (untere Stellung) und/oder für das andere Kältemittel R1234yf (obere Stellung) positioniert werden kann,
wobei diese beiden Stellungen die Bewegung des Schiebers (1) lediglich in diesen vorgegebenen Endlagen bewirken,
wobei der im Anschlagkolben (2) integrierte Stößelkolben (3) einen definiert begrenzten Hub zum Öffnen der Anschlussventile des Fahrzeuganschluss ausführen kann,
wobei die entsprechende Hubbewegung in Abhängigkeit der jeweils konkreten Stellung des Anschlagkolbens (2) aus der voreingenommenen Position für das eine Kältemittel R134a oder für das andere Kältemittel R1234yf beginnend erfolgt und
wobei die Spannkugeln aufgrund der erforderlichen Spannwegfreiheit durch einen Stift gehalten werden.

2. Vorrichtung nach Anspruch 1, **dadurch gekennzeichnet, dass** der Hochdruckadapter für jedes Kältemittel eine separate Füllleitung mit einem Füllventil aufweist.

3. Vorrichtung nach Anspruch 1, **dadurch gekennzeichnet, dass** der Niederdruckadapter so ausgestaltet ist, dass er auf beide medienspezifischen Anschlussventile der Klimaanlage spannen kann.

## Claims

1. A device for filling air conditioning systems with a refrigerant during final vehicle assembly,
wherein the air conditioning systems to be filled comprise one connection valve each on their high pressure and on their low-pressure sides, which connection valves differ in their geometrical contour to prevent mix-ups between the high-pressure side and the low-pressure side and at the same time to ensure that only the respective approved refrigerant is filled into the air conditioning system, and
wherein the device can be brought into an operative connection with connection valves on the low-pressure side and on the high-pressure side using low pressure and high pressure adapters. **characterized in that**
just one high pressure adapter and one low pressure adapter is provided for two different refrigerants R134 and R1234yf,
wherein the connection valves of the air conditioning systems to be filled have different geometries for the two different refrigerants R134 and R1234yf,
wherein the high-pressure adapter via which the air conditioning system is filled includes mechanical components which interact to prevent a connection valve that does not match the preselected refrigerant from being opened for filling,
**in that**, by preselecting the type of one of the two different refrigerants R134 and R1234yf, a stop piston in the adapter can be positioned so that the high-pressure adapter can detect a correct and/or incorrect vehicle port using an associated path measuring system, wherein
the device comprises clamping system that includes a slider (1) with a magnet (4), a stop piston (2) with an integrated plunger (3), a path measuring system (6) and clamping balls,
wherein the slider (1) takes different positions based on the respective geometrical design of the connection valves, which are detected by the magnet (4) via the path measuring system (6),
wherein the slider (1) is designed so that, in its normal position, it closes the adapter with a gasket (5) designed as an O-ring,
wherein the stop piston (2), in accordance with a preselected type on the filling system, can be placed in positions for the one refrigerant R134a (lower position) and/or the other refrigerant R1234yf (upper position),
wherein these two positions allow movement of the slider (1) in these predetermined end positions only,
wherein the plunger (3) integrated in the stop piston (2) can perform a limited stroke to open the connection valves of the vehicle port,
wherein the respective stroke movement is performed depending on the respective position of the stop piston (2), starting from the preset position for the one refrigerant, R134a, or the other refrigerant, R1234yf, and
wherein the clamping balls are held by a pin due to the required unobstructed clamping path.

2. The device according to claim 1, **characterized in that** the high-pressure adapter has a separate filling line with a filling valve for each refrigerant.

3. The device according to claim 1, **characterized in that** the low-pressure adapter is designed to be mounted on both media-specific connection valves of the air conditioning system.

## Revendications

1. Dispositif de remplissage de systèmes de climatisation avec un réfrigérant lors du montage final sur véhicule,
où les systèmes de climatisation à remplir comportent, du côté basse pression et du côté haute pression, une vanne de raccordement, les vannes de raccordement des systèmes de climatisation à remplir présentant des géométries différentes, ceci pour éviter toute confusion entre le côté haute pression et le côté basse pression et pour assurer en même temps que chaque remplissage du système de climatisation n'est effectué qu'avec le réfrigérant adéquat, ledit dispositif de remplissage pouvant être mis en liaison active, à l'aide d'adaptateurs basse pression et d'adaptateurs haute pression, avec les vannes de raccordement du côté basse pression et du côté haute pression,
**caractérisé en ce**
**que** pour chacun des deux réfrigérants différents R134a et R1234yf n'est prévu qu'un seul adaptateur haute pression et qu'un seul adaptateur basse pression,
où les vannes de raccordement des systèmes de climatisation à remplir prévues pour les deux réfrigérants différents R134a et R1234yf présentent des géométries différentes,
où l'adaptateur haute pression à l'aide duquel est rempli le système de climatisation, est équipé de composants mécaniques qui, grâce à leur interaction, évitent l'ouverture ou le remplissage d'une vanne de raccordement ne correspondant pas au réfrigérant présélectionné,
où par présélection du type d'un des deux réfrigérants différents R134a et R1234yf, un piston de butée peut être positionné dans l'adaptateur, ceci de telle manière que l'adaptateur haute pression peut diagnostiquer, au moyen d'un capteur de déplacement correspondant, si le raccordement au véhicule est correct et/ou erroné, le dispositif de remplissage comportant un système de serrage présentant un coulisseau (1) pourvu d'un aimant (4), un piston de butée (2) pourvu d'un piston poussoir intégré (3), un capteur de déplacement (6) et des billes de serrage,
où en fonction de la structure géométrique spécifique des vannes de raccordement, le coulissau (1) prend des positions différentes qui ensuite sont évaluées par l'aimant (4) et au moyen du capteur de déplacement (6),
où le coulisseau (1) est construit de telle manière que, dans sa position de base, il ferme l'adaptateur moyennant un joint (5) conçu en tant que joint torique,
où la position du piston de butée (2) peut être présélectionnée sur le dispositif de remplissage pour le réfrigérant R134a (position inférieure) et/ou pour l'autre réfrigérant R1234yf (position supérieure),
où ces deux positions ne provoquent le mouvement du coulisseau (1) que dans ces deux fins de course,
où le piston poussoir intégré (3) dans le piston de butée (2) peut effectuer une course limitée définie pour ouvrir les vannes de raccordement du véhicule,
où chaque course est réalisée en fonction de la position concrète du piston de butée (2) et en commençant soit par la position précédente pour le réfrigérant R134a, soit par la position pour l'autre réfrigérant R1234yf,
et où les billes de serrage sont retenues, afin d'assurer le jeu nécessaire à la course de serrage, par une broche.

2. Dispositif suivant la revendication 1, **caractérisé en ce que** l'adaptateur haute pression de chaque réfrigérant est doté d'un tuyau de remplissage avec une vanne de remplissage.

3. Dispositif suivant la revendication 1, **caractérisé en ce que** l'adaptateur basse pression est conçu de telle manière qu'il peut être serré sur les deux vannes de raccordement prévues pour des réfrigérants différents du système de climatisation.
